# EUROPEAN PATENT SPECIFICATION

(11) **EP 3 232 618 B1**
(45) Date of publication and mention of the grant of the patent: **20.02.2019**
(21) Application number: 15867971.2
(22) Date of filing: 12.03.2015
(51) Int. Cl.: H04L 12/733, H04L 12/751, H04L 12/753, H04W 40/24, H04W 84/18

(54) **TREE STRUCTURE NETWORK AUTONOMOUS MANAGEMENT AND NODE ADDING METHOD**
AUTONOMES VERWALTUNGS- UND KNOTENADDIERVERFAHREN FÜR NETZWERK MIT BAUMSTRUKTUR
PROCÉDÉ D'AJOUT DE NOEUD ET DE GESTION AUTONOME DE RÉSEAU À STRUCTURE ARBORESCENTE

(30) Priority: 08.12.2014 CN 201410743785
(43) Date of publication of application: 18.10.2017
(73) Proprietor: Institute of Acoustics, Chinese Academy of Sciences, Haidian District Beijing 100190 (CN); Shanghai 3NTV Network Technology Co. Ltd., Shanghai 200072 (CN); Beijing Hili Technology Co. Ltd, Beijing 100190 (CN)
(72) Inventor: WANG, Jinlin, Beijing 100190 (CN); YOU, Jiali, Beijing 100190 (CN); LIU, Xue, Beijing 100190 (CN); CHENG, Gang, Beijing 100190 (CN); DENG, Haojiang, Beijing 100190 (CN)
(74) Representative: Hanna Moore + Curley
(86) International application number: PCT/CN2015/074085
(87) International publication number: WO 2016/090758

(56) References cited:
- WO-A1-2008/096912
- WO-A1-2013/042207
- CN-A- 101 179 499
- CN-A- 101 197 748
- CN-A- 103 078 796
- US-A1- 2003 235 158
- US-A1- 2009 034 434

## Description

### TECHNICAL FIELD

The present invention relates to the field of computer network, and particularly to a tree structure network autonomous management and node adding method.

### BACKGROUND OF THE INVENTION

As computers and networks are being developed constantly, there is a growing demand for services, and an increasing need for processing requirements in the internet, and coordinated processing and management for a large scale of nodes is a key issue in various systems. In the network, the nodes are commonly structured and managed in a tree-shaped topology. If there is a large scale of nodes, then the start efficiency and processing efficiency of a service may depend upon how to perform efficient addressing, positioning and joining management for the nodes. If the nodes are managed out of order, then it may take a longer period of time to search for and position a node, and both of the extensibility of the system and the performance of the services may be significantly influenced.

In a real network, there are a large number of dynamic user nodes in addition to service nodes deployed in the network. If a user node has a service request, it is an important approach to improve network service performance that a service node close to the user node responds to the request. Accordingly if there are a large number of nodes, it will be an important problem that how to organize the nodes and to direct the request rapidly to a service node located nearby.

At present, for autonomous management on the nodes in the network, P2P network related technique provides some methods including unstructured P2P network, structured P2P network, etc. In these methods, the nodes are organized in an overlay network structure, and intercommunication and routing among the nodes is guaranteed by a logic topology. However, these methods are generally designed and built for some application, e.g., a streaming media system, and they are structured with some limitation, and thus may not be appropriate for other applications.
United States Patent Specification No. US 2003/23158 discloses a network protocol for low-cost, low-power devices coupled to a self-organizing wireless network using a spanning tree backbone architecture is described. In this disclosed protocol, physical and logical network construction and maintenance operations, which supports efficient data routing in the network, are performed. The patent specification discloses a self-healing mechanism so that the network can recover from node failures and a self-updating mechanism so that the network can expand as more nodes enter the system. Also, the logical backbone hierarchy will facilitate multi-hop communication.
United States Patent Specification No. US 2009/034434 discloses a decentralized protocol for constructing a tree-based P2P live video streaming network with the Interior-Node-Disjoint (IND) multi-tree structure with the special Link-Level-Homogeneous property. The IND multi-tree structure recycles the wasted uploading capacities of leaf nodes in the tree-based P2P networks.

### SUMMARY OF THE INVENTION

An object of the present invention is to address the drawbacks of the tree structure network autonomous management and node adding method in the prior art, so as to provide a flexible and convenient method. The invention is defined in the appended claim 1.

In order to attain the object above, the present invention provides a tree structure network autonomous management and node adding method, the method comprises:
firstly measuring routing hops between a node to be added and each node in a tree structure network, and then adding the node to be added to an appropriate position in the tree-shaped network according to a routing hop relationship, so that a physical hop relationship and a topology hop relationship between the nodes remain substantially consistent;
each node in the tree-shaped network comprises: a list of child nodes, a counter of the number of child nodes, a list of neighbor nodes, and a parent node pointer; and the method further comprises:
   step 1), setting a node as a dynamic root node o, and representing a list of child nodes of the dynamic root node o as *P* = {*p*₁,*p*₂,...,*pᵢ*,...}; wherein the dynamic root node o is initially a root node *R*;
   step 2), for any child node *pᵢ* of the dynamic root node o, calculating hops *h*_{o,s} between the newly added node s and the dynamic root node o, hops *h_{s,pᵢ}* between the newly added node s and the child node *pᵢ*, and hops *h_{o,pᵢ}* between the dynamic root node o and the child node *pᵢ*, if *h*_{o,s} + *h_{s,pᵢ}* = *h_{o,pᵢ}*, determining *pᵢ* as a child node of the newly added node s, and determining the dynamic root node o as a parent node of the newly added node s, and then ending the operation; if there is no child node *pᵢ* satisfying *h_{o,s}* + *h_{s,pᵢ}* = *h_{o,pᵢ}*, proceeding to the next step;
   step 3), for any child node *pᵢ* of the dynamic root node o, if the hops *h_{s,pᵢ}* between the newly added node s and the child node *pᵢ* are larger than the number of hops *h*_{o,s} between the newly added node s and the dynamic root node o, determining the dynamic root node o as a parent node of the newly added node s, and then ending the operation; otherwise, proceeding to the next step; and
   step 4), for any child node *pᵢ* of the dynamic root node o, if the hops *h_{s,pᵢ}* between the newly added node s and the child node *pᵢ* are less than the hops *h*_{o,s} between the newly added node s and the dynamic root node o, referring to the list of child nodes of *pᵢ,* if the list of child nodes of *pᵢ* is empty, inserting the node s directly into the list of child nodes as a leaf node of *pᵢ,* and ending the operation; if the list of child nodes of *pᵢ* is not empty, determining the child node *pᵢ* as a new dynamic root node o, and performing the step 2) again;
wherein the step 2) further comprises: if there are more than one child nodes *pᵢ* satisfying the condition *h*_{o,s} + *h_{s,pᵢ}* = *h_{o,pᵢ}*, determining all the child nodes *pᵢ* satisfying the condition as child nodes of the newly added node s, and determining the dynamic root node o as a parent node of the newly added node s.

The present invention has the following advantages:

The present invention provides a flexible node autonomous management method for a network service with a large scale of nodes participated, and the adding process thereof reflects a physical position relationship between nodes as far as possible, and facilitates the addressing and searching of nodes.

### BRIEF DESCRIPTION OF THE DRAWINGS

Fig. 1 is a flow chart of a method according to the present invention;
Fig. 2 is a schematic diagram of a case that a newly added node is between a root node and a child node;
Fig. 3 is a schematic diagram of a case that a newly added node is a leaf node of a root node; and
Fig. 4 is a schematic diagram of a case that a newly added node is a child node of a root node.

### DETAILED DESCRIPTION OF THE INVENTION

The present invention will be described below in further details in conjunction with the drawings.

All the nodes in a network can constitute a tree-shaped network in which a root node plays a management role, there are a parent node and possibly a number of child nodes for each of the other nodes than the root node, and only the nodes at the same level in the tree may have a neighbor node relationship, that is, a neighbor node of a certain node refers to another node at the same level in the tree as the node. Each node constituting the tree has the following data structure including: a list of child nodes, a counter of the number of child nodes, a list of neighbor nodes, and a parent node pointer. As their names imply, the list of child nodes is used to describe information about child nodes under a present node; the counter of the number of child nodes is used to describe the number of child nodes of the present node; the list of neighbor nodes is used to describe information about neighbor nodes of the present node; and the parent node pointer is used to describe a pointer of a parent node of the present node.

A method according to the present invention comprises: when adding a new node to the tree-shaped network, firstly measuring routing hops between a node to be added and each node in a tree-shaped network, and then adding the node to be added to an appropriate position in the tree-shaped network according to a routing hop relationship, so that a physical hop relationship and a topology hop relationship between the nodes remain substantially consistent.

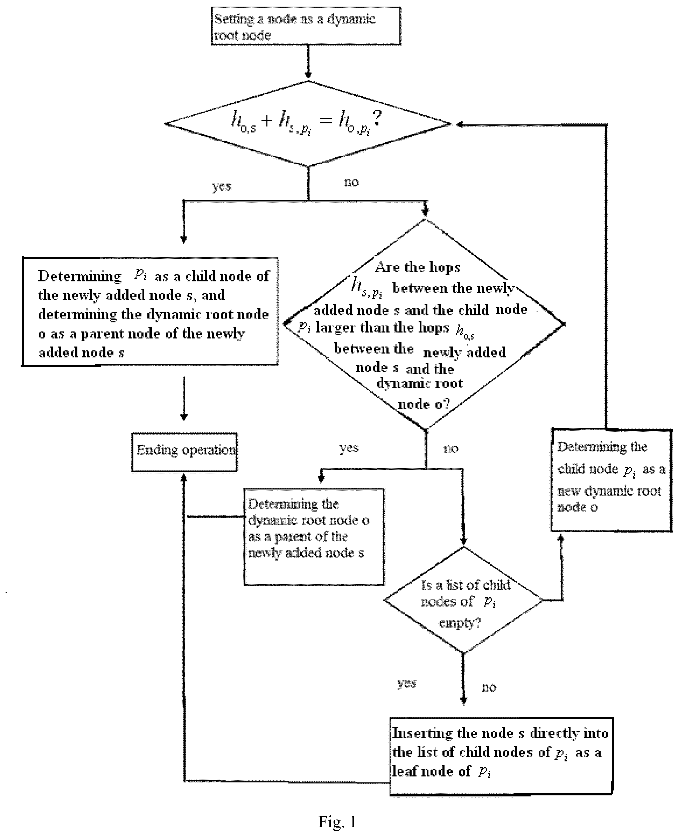

The node adding method according to the present invention will be described below in details with reference to Fig. 1.

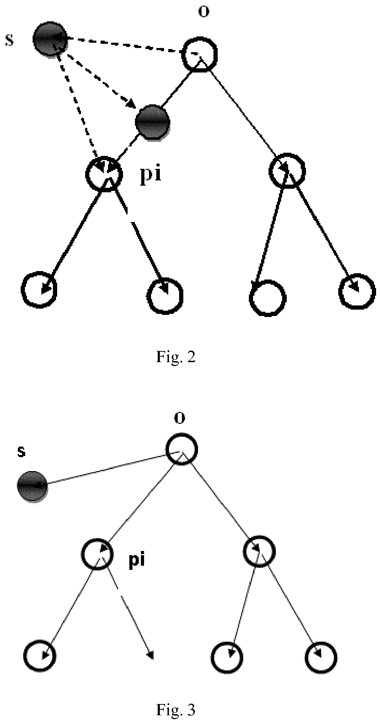

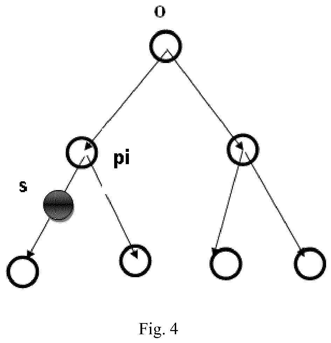

If a new node s is to be added to a tree-shaped network including a root node R, then the adding process of the new node s comprises:
step 1), setting a node as a dynamic root node o, and representing a list of child nodes of the dynamic root node o as *P* = {*p*₁,*p*₂,*...,pᵢ*,*...*}; wherein the dynamic root node o is initially the root node *R*;
step 2), for any child node *pᵢ* of the dynamic root node o, calculating hops *h*_{o,s} between the newly added node s and the dynamic root node o, hops *h_{s,pᵢ}* between the newly added node s and the child node *pᵢ,* and hops *h_{s,pᵢ}* between the dynamic root node o and the child node *pᵢ,* if *h*_{o,s} + *h_{s,pᵢ}* = *h_{o,pᵢ}*, which indicates that the newly added node s is located between the dynamic root node o and the child node *pᵢ,* referring to Fig. 2, determining *pᵢ* as a child node of the newly added node s, and determining the dynamic root node o as a parent node of the newly added node s; if there are more than one child nodes *pᵢ* satisfying the condition *h*_{o,s} + *h_{s,pᵢ}* = *h_{o,pᵢ}*, determining all the child nodes *pᵢ* satisfying the condition as child nodes of the newly added node s, and determining the dynamic root node o as a parent node of the newly added node s; after adding the node s to the tree-shaped network, ending the operation; and if there is no child node *pᵢ* satisfying the condition *h*_{o,s} + *h_{s,pi}* = *h_{o,pᵢ}*, proceeding to the next step;
step 3), for any child node *pᵢ* of the dynamic root node o, if the hops *h_{s,pᵢ}* between the newly added node s and the child node *pᵢ* are larger than the hops *h*_{o,s} between the newly added node s and the dynamic root node o, then referring to Fig. 3, determining the dynamic root node o as a parent node of the newly added node s, that is, determining the newly added node s as a leaf node of the dynamic root node o; after the adding process completes, ending the operation; otherwise, proceeding to the next step;
step 4), for any child node *pᵢ* of the dynamic root node o, if the hops *h_{s,pᵢ}* between the newly added node and the child node *pᵢ* are less than the hops *h*_{o,s} between the newly added node s and the dynamic root node o, which indicates that the newly added node s should be located in a child tree of the node *pᵢ,* referring to a list of child nodes of *pᵢ,* if the list of child nodes of *pᵢ* is empty, then referring to Fig. 4, inserting the node s directly into the list of child nodes as a leaf node of *pᵢ,* after the adding process completes, ending the operation; if the list of child nodes of *pᵢ* is not empty, determining the child node *pᵢ* as a new dynamic root node o; and performing the step 2) again.
Finally, it should be explained that the aforementioned embodiments are merely used for illustrating, rather than limiting the technical solutions of the present invention. Although the present invention has been described in detail with reference to the embodiments, those skilled in the art will understand that modifications or equivalent substitutions can be made to the technical solutions of the present invention without departing from the scope of the present invention as defined by the appended claim.

## Claims

1. A tree structure network autonomous management and node adding method, comprising:
firstly measuring routing hops between a node to be added and each node in a tree structure network, and then adding the node to be added to an appropriate position in the tree-shaped network according to a routing hop relationship, so that a physical hop relationship and a topology hop relationship between the nodes remain substantially consistent;
each node in the tree structure network comprises: a list of child nodes, a counter of the number of child nodes, a list of neighbor nodes, and a parent node pointer; and the method further comprises:
step 1), setting a node as a dynamic root node o, and representing a list of child nodes of the dynamic root node o as *P* = {*p*₁,*p*₂,...,*pᵢ*,...}; wherein the dynamic root node o is initially a root node *R*;
step 2), for any child node *pᵢ* of the dynamic root node o, calculating hops *h*_{o,s} between the newly added node s and the dynamic root node o, hops *h*_{*s*,*pᵢ*} between the newly added node s and the child node *pᵢ,* and hops *h_{o,pᵢ}* between the dynamic root node o and the child node *pᵢ,* if *h*_{o,s} + *h_{s,pᵢ}* = *h_{o,pᵢ}*, determining *pᵢ* as a child node of the newly added node s, and determining the dynamic root node o as a parent node of the newly added node s, and then ending the operation; if there is no child node *pᵢ* satisfying *h*_{o,s} + *h_{s,pᵢ}* = *h_{o,pᵢ}*, proceeding to the next step;
step 3), for any child node *pᵢ* of the dynamic root node o, if the hops *h_{s,pᵢ}* between the newly added node s and the child node *pᵢ* are larger than the hops *h*_{o,s} between the newly added node s and the dynamic root node o, determining the dynamic root node o as a parent node of the newly added node s, and then ending the operation; otherwise, proceeding to the next step; and
step 4), for any child node *pᵢ* of the dynamic root node o, if the hops *h*_{*s*,*pᵢ*} between the newly added node s and the child node *pᵢ* are less than the hops *h*_{o,s} between the newly added node s and the dynamic root node o, referring to the list of child nodes of *pᵢ,* if the list of child nodes of *pᵢ* is empty, inserting the node s directly into the list of child nodes as a leaf node of *pᵢ,* and ending the operation; if the list of child nodes of *pᵢ* is not empty, determining the child node *pᵢ* as a new dynamic root node o, and performing the step 2) again;
wherein the step 2) further comprises: if there are more than one child nodes *pᵢ* satisfying the condition *h*_{o,s} + *h_{s,pᵢ}* = *h_{o,pᵢ}*, determining all the child nodes *pᵢ* satisfying the condition as child nodes of the newly added node s, and determining the dynamic root node o as a parent node of the newly added node s.

## Patentansprüche

1. Verfahren zum autonomen Verwalten eines Baumstrukturnetzwerks und zum Hinzufügen von Knoten, umfassend:
zuerst Messen von Routing-Sprüngen zwischen einem hinzuzufügenden Knoten und jedem Knoten in einem Baumstrukturnetzwerk, und dann Hinzufügen des hinzuzufügenden Knotens in einer geeigneten Position in dem baumförmigen Netzwerk gemäß einer Beziehung von Routing-Sprüngen, so dass eine Beziehung der physischen Sprünge und eine Beziehung der Topologiesprünge zwischen den Knoten im Wesentlichen einheitlich bleibt;
wobei jeder Knoten in dem Baumstrukturnetzwerk umfasst: eine Liste mit Kindknoten, einen Zähler der Anzahl von Kindknoten, eine Liste mit Nachbarknoten und einen Elternknotenzeiger; und wobei das Verfahren ferner umfasst:
Schritt 1) Einrichten eines Knotens als einen dynamischen Wurzelknoten o und Darstellen einer Liste mit Kindknoten des dynamischen Wurzelknotens als P = {p₁, p₂, ..., pᵢ, ...}, wobei der dynamische Wurzelknoten o anfänglich ein Wurzelknoten R ist;
Schritt 2) für einen beliebigen Kindknoten pᵢ des dynamischen Wurzelknotens o, Berechnen der Sprünge h_{o,s} zwischen dem neu hinzugefügten Knoten s und dem dynamischen Wurzelknoten o, der Sprünge hs,pᵢ zwischen dem neu hinzugefügten Knoten s und dem Kindknoten pᵢ und der Sprünge h_{o,pi} zwischen dem dynamischen Wurzelknoten o und dem Kindknoten pᵢ, falls h_{o,s} + h_{s,pi} = h_{o,pi}, Bestimmen von pᵢ als einen Kindknoten des neu hinzugefügten Knotens s, und dann Beenden des Vorgangs; falls es keinen Kindknoten pᵢ gibt, der h_{o,s} + h_{s,pi} = h_{o,pi} erfüllt, Fortfahren mit dem nächsten Schritt;
Schritt 3) für einen beliebigen Kindknoten pᵢ des dynamischen Wurzelknotens o, falls die Sprünge h_{s,pi} zwischen dem neu hinzugefügten Knoten s und dem Kindknoten pᵢ größer als die Sprünge h_{o,s} zwischen dem neu hinzugefügten Knoten s und dem dynamischen Wurzelknoten o sind, Bestimmen des dynamischen Wurzelknotens o als einen Elternknoten des neu hinzugefügten Knotens s, und dann Beenden des Vorgangs; ansonsten Fortfahren mit dem nächsten Schritt; und
Schritt 4) für einen beliebigen Kindknoten pᵢ des dynamischen Wurzelknotens o, falls die Sprünge h_{s,pi} zwischen dem neu hinzugefügten Knoten s und dem Kindknoten pᵢ geringer als die Sprünge h_{o,s} zwischen dem neu hinzugefügten Knoten s und dem dynamischen Wurzelknoten o sind, Bezugnehmen auf die Liste mit Kindknoten von pᵢ, falls die Liste mit Kindknoten von pᵢ leer ist, Einfügen des Knotens s direkt in die Liste mit Kindknoten als einen Blattknoten von pᵢ und Beenden des Vorgangs; falls die Liste mit Kindknoten von pᵢ nicht leer ist, Bestimmen des Kindknotens pᵢ als einen neuen dynamischen Wurzelknoten o und erneutes Ausführen von Schritt 2);
wobei Schritt 2) ferner umfasst: falls es mehr als einen Kindknoten pᵢ gibt, der die Bedingung h_{o,s} + h_{s,pi} = h_{o,pi} erfüllt, Bestimmen aller Kindknoten pᵢ, welche die Bedingung als Kindknoten des neu hinzugefügten Knotens s erfüllen, und Bestimmen des dynamischen Wurzelknotens o als einen Elternknoten des neu hinzugefügten Knotens s.

## Revendications

1. Procédé d'ajout de noeud et de gestion autonome de réseau à structure arborescente, comprenant :
premièrement, mesurer des sauts de routage entre un noeud à ajouter et chaque noeud dans un réseau à structure arborescente, puis ajouter le noeud à ajouter à une position appropriée dans le réseau en forme d'arbre selon une relation de saut de routage, de telle sorte qu'une relation de saut physique et une relation de saut de topologie entre les noeuds restent sensiblement cohérentes ;
chaque noeud dans le réseau à structure arborescente comprenant : une liste de noeuds enfants, un compteur du nombre de noeuds enfants, une liste de noeuds voisins, et un pointeur de noeud parent ; et le procédé comprenant en outre :
étape 1), définir un noeud comme noeud racine dynamique o, et représenter une liste de noeuds enfants du noeud racine dynamique o par *P* = {*p*₁,*p*₂,...,*pᵢ*,.*.*}; le noeud racine dynamique o étant initialement un noeud racine *R* ;
étape 2), pour un quelconque noeud enfant *pᵢ* du noeud racine dynamique o, calculer des sauts *h_{o,s}* entre le noeud nouvellement ajouté s et le noeud racine dynamique o, des sauts *h_{s,pi}* entre le noeud nouvellement ajouté s et le noeud enfant *pᵢ*, et des sauts *h_{o,pi}* entre le noeud racine dynamique o et le noeud enfant *pᵢ*, si *h*_{o,s} + *h_{s,pᵢ}* = *h_{o,pᵢ}*, déterminer *pᵢ* comme noeud enfant du noeud nouvellement ajouté s, et déterminer le noeud racine dynamique o comme noeud parent du noeud nouvellement ajouté s, puis mettre fin à l'opération ; s'il n'y pas de noeud enfant *pᵢ* satisfaisant *h*_{o,s} + *h_{s,pᵢ}* = *h_{o,pᵢ}*, procéder à l'étape suivante ;
étape 3), pour un quelconque noeud enfant *pᵢ* du noeud racine dynamique o, si les sauts *h_{s,pi}* entre le noeud nouvellement ajouté s et le noeud enfant *pᵢ* sont plus grands que les sauts *h_{o,s}* entre le noeud nouvellement ajouté s et le noeud racine dynamique o, déterminer le noeud racine dynamique o comme noeud parent du noeud nouvellement ajouté s, puis mettre fin à l'opération ; autrement, procéder à l'étape suivante ; et
étape 4), pour un quelconque noeud enfant *pᵢ* du noeud racine dynamique o, si les sauts *h_{s,pi}* entre le noeud nouvellement ajouté s et le noeud enfant *pᵢ* sont inférieurs aux sauts *h_{o,s}* entre le noeud nouvellement ajouté s et le noeud racine dynamique o, consulter la liste de noeuds enfants de *pᵢ*, si la liste de noeuds enfants de *pᵢ* est vide, introduire le noeud s directement dans la liste de noeuds enfants comme noeud feuille de *pᵢ,* et mettre fin à l'opération ; si la liste de noeuds enfants de *pᵢ* n'est pas vide, déterminer le noeud enfant *pᵢ* comme nouveau noeud racine dynamique o, et réaliser de nouveau l'étape 2) ;
l'étape 2) comprenant en outre : s'il existe plus qu'un noeud enfant *pᵢ* satisfaisant la condition *h*_{o,s} + *h_{s,pᵢ}* = *h_{o,pᵢ}*, déterminer tous les noeuds enfants *pᵢ* satisfaisant la condition comme noeuds enfants du noeud nouvellement ajouté s, et déterminer le noeud racine dynamique o comme noeud parent du noeud nouvellement ajouté s.
